# EUROPÄISCHE PATENTANMELDUNG

(11) **EP 4 841 834 A1**
(43) Veröffentlichungstag der Anmeldung: **18.11.2026**
(21) Anmeldenummer: 25176768.7
(22) Anmeldetag: 15.05.2025
(51) Int. Cl.: H01R 43/00, H01R 13/52, H01R 43/28

(54) **TÜLLENBESTÜCKUNGSMODUL**

(71) Anmelder: komax Holding AG, 6036 Dierikon (CH)
(72) Erfinder: BUSSMANN, Thomas, 6424 Lauerz (CH)
(74) Vertreter: Inventio AG

(57) **Zusammenfassung**

Ein Tüllenbestückungsmodul (1) zum Bestücken eines Kabelendes eines Kabels (12) mit einer Tülle (11) umfasst einen Bestückungskopf (2) mit einer Spreizhülse (3) und einem ein Tüllenaufnahmeteil (4) zum Aufnehmen und Halten der Tülle (11) während des Bestückungsvorgangs sowie eine Transfereinheit (7) mit vier Dornen (8). Die Spreizhülse (3) des Bestückungskopfs (2) umgibt temporär den Dorn (8) in einer Übergabestellung, so dass die Tülle (11) durch axiales Verfahren des Tüllenaufnahmeteils (4) auf die Spreizhülse (3) geschoben und danach die Tülle (11) mittels des Tüllenaufnahmeteils (4) von der Spreizhülse (3) auf das Kabel (12) abgestreift werden kann. Die Spreizhülse (3) und das Tüllenaufnahmeteil (4) sind dabei als Wechselteile ausgeführt. Das Tüllenaufnahmeteil (4) weist sodann eine Stirnseite (9) auf, die einen Anschlag zum Vorgeben eines Aufschiebehubs (d₁, d₂) bildet, welcher mit einem dem Tüllenaufnahmeteil (4) zugeordneten Gegenstück (10) zusammenwirkt.

## Beschreibung

Die Erfindung betrifft ein Tüllenbestückungsmodul zum Bestücken eines Kabelendes eines Kabels gemäss dem Oberbegriff von Anspruch 1. Mit einem derartigen Tüllenbestückungsmodul können Tüllen, die beispielsweise für feuchtigkeitsdichte Durchführungen von elektrischen Kabeln durch Steckergehäuse oder Gehäusewände von Elektroapparaten benötigt werden, auf Kabel gebracht werden.

Bei der Konfektionierung von Kabeln können Kabel abgelängt und abisoliert, mit Tüllen bestückt, gecrimpt und gegebenenfalls mit Gehäusen versehen werden. Dazu wird ein abisoliertes Kabel mit einer Tülle bestückt, danach wird in der Regel ein Metallkontakt angecrimpt. Dieser Crimpkontakt ist dabei so ausgebildet, dass er die Tülle auf dem Kabel festhält. Zur Konfektionierung von Kabeln werden häufig Automaten oder Halbautomaten eingesetzt, wobei bei einem Halbautomaten die Kabelzuführung zur jeweiligen Bearbeitungsstation manuell erfolgt.

Aus der EP 0 626 738 A1 ist eine gattungsmässig vergleichbares Tüllenbestückungsmodul bekannt geworden. Das Tüllenbestückungsmodul ist hier Bestandteil einer Tüllenstation, die einen Tüllenspeicher mit einer mit Tüllen befüllten Trommel und das erwähnte Tüllenbestückungsmodul zum Bestücken eines abisolierten Kabelendes eines Kabels mit einer Tülle umfasst. Die über eine Förderschiene werden die Tüllen lagerichtig zu einer Vereinzelungseinheit gefördert, von welcher Tüllen jeweils einzeln auf einen Dorn einer Transfereinheit aufgeschoben werden. Die Transfereinheit ist als Drehvorrichtung ausgestaltet und umfasst insgesamt vier Dorne. Neben der erwähnten Transfereinheit mit den vier Dornen umfasst das Tüllenbestückungsmodul weiter einen Bestückungskopf mit einer Spreizhülse. Am Ende der Vereinzelungseinheit ist eine Ausstossvorrichtung mit einem auf und ab bewegbaren Stössel angeordnet, wobei mit dem Stössel jeweils die erste Tülle in der Förderschiene der Transfereinrichtung zugeführt wird. Die Transfereinrichtung ist schrittweise um einen 90°-Winkel drehbar, wobei in einer ersten Stellung jeweils die Tülle auf den Dorn mittels des erwähnten Stössels geschoben wird. Nach einer Drehung um 90° wird in einer zweiten Stellung der Transfereinheit die Tülle zum Zwecke des Aufweitens auf einen Bereich des Dorns geschoben, der einen grösseren Durchmesser aufweist. Die eigentliche Bestückung des Kabelendes mit der Tülle erfolgt in einer dritten Stellung. In dieser dritten Stellung der Transfereinrichtung wird die Tülle vom Dorn unter Verwendung des Bestückungskopfs mit Tüllenaufnahmeteil und Spreizhülse abgezogen und die Tülle in aufgeweitetem Zustand auf das Kabel platziert und schliesslich darauf abgeschoben. Sobald der Dorn in die dritte Stellung geschwenkt wurde, umschliesst der Bestückungskopf mit der zweiteilig ausgeführten Spreizhülse und einer ebenfalls zweiteilig ausgebildeten Tüllenaufnahmeteil die Tülle. Mittels des Tüllenaufnahmeteils wird die Tülle auf die Spreizhülse geschoben. Das Tüllenbestückungsmodul kann dazu einen pneumatischen Schiebe- und Abstreiferantrieb zum Verfahren des Tüllenaufnahmeteils umfassen. Gemäss dem Stand der Technik kann diese Bewegung mit einem durch eine auf einer Kolbenstange des pneumatischen Schiebe- und Abstreiferantriebs sitzende und einen Anschlag vorgebende Kolbenstangenmutter begrenzt werden. Das Tüllenaufnahmeteil lässt sich soweit entlang einer Längsmittelachse verfahren, bis die Kolbenstangenmutter an das Bestückungskopfgehäuse anschlägt. Daraus ergibt sich der sog. Aufschiebehub. Die Spreizhülse, die gegenüber dem Tüllenaufnahmeteil vorgelagert ist, weist am vorderen, dem Kabel zugewandten Ende, einen aufgeweiteten Bereich mit einer trichterförmigen Einführöffnung zum Einführen des Kabels in den geschlossenen Bestückungskopf auf. In der Praxis hat sich gezeigt, dass diese Tüllenbestückungsstation einen relativ grossen Kabelüberstand erfordert. Beispielsweise muss bei vollautomatisch ausgeführten Tüllenstationen das Kabel um diesen Kabelüberstand auf einem Kabelgreifer, der das Kabel zum Bestückungskopf bringt, herausstehen und kann entsprechend durchhängen. Beim Zuführen des Kabels mit dem Greifer können unerwünschte Schwingungen und Bewegungen entstehen, die Handhabung von insbesondere dünnen Kabeln kann schwierig sein. Ein weiteres Schwierigkeit besteht darin, dass wenn mit der Tüllenstation unterschiedliche Artikel verarbeitet werden sollen, aufwendige Umrüstarbeiten Tüllenbestückungsmodul notwendig sind. So ist es beispielsweise erforderlich, dass nach dem Umrüsten das Tüllenbestückungsmodul neu eingerichtet und eingestellt werden muss, beispielsweise indem die axiale Position der Kolbenstangenmutter auf der Kolbenstange durch Verdrehen verstellt wird. Diese Einstellarbeiten sind aufwendig und erfordern ein hohes Mass an Sorgfalt. Weiter können wegen falscher Einstellungen, beispielsweise wegen zu grossem Aufschiebehub Werkzeuge wie insbesondere die Spreizhülse beschädigt werden.

Es ist deshalb eine Aufgabe der vorliegenden Erfindung, die Nachteile des Bekannten zu vermeiden und insbesondere ein Tüllenbestückungsmodul zu schaffen, mit dem Kabel zuverlässig und effizient mit Tüllen bestückt werden können. Das Tüllenbestückungsmodul soll insbesondere derart ausgeführt sein, dass ein einfaches und schnelles Umrüsten im Hinblick auf neue oder andere Tüllen einfach und schnell möglich ist.

Diese Aufgabe wird erfindungsgemäss mit dem Tüllenbestückungsmodul mit den Merkmalen von Anspruch 1 gelöst. Das Tüllenbestückungsmodul zum Bestücken eines Kabelendes eines Kabels mit einer Tülle umfasst einen vorzugsweise pneumatisch antreibbaren Bestückungskopf und eine Transfereinheit mit wenigstens einem Dorn. Das Tüllenbestückungsmodul kann dabei Bestandteil einer Tüllenstation sein, welche Tüllenstation neben dem Tüllenbestückungsmodul einen Tüllenspeicher mit beispielsweise einer mit Tüllen befüllten Trommel umfassen kann. Über eine Förderschiene können die Tüllen lagerichtig zu einer Vereinzelungseinheit gefördert werden, von welcher Tüllen jeweils einzeln auf einen Dorn der Transfereinheit aufgeschoben werden können. Der Bestückungskopf verfügt über einen entlang einer Längsmittelachse sich erstreckende Spreizhülse zum Halten der Tülle in aufgeweiteten Zustand und ein Tüllenaufnahmeteil zum Aufnehmen und Halten der Tülle während des Bestückungsvorgangs und zum Platzieren der Tülle auf das Kabelende. Die Transfereinheit mit dem wenigstens einen Dorn ist ausgeführt, dass in einer Übernahmestellung eine Tülle auf den Dorn in einem ersten Dornabschnitt aufschiebbar ist und der in einer Übergabestellung derart mit dem Bestückungskopf in Wirkverbindung steht, dass die Tülle vom Dorn dem Bestückungskopf übergeben werden kann. Dabei umgibt in der Übergabestellung die Spreizhülse des Bestückungskopfs den Dorn temporär, so dass die Tülle mittels des Tüllenaufnahmeteils oder genauer gesagt durch axiales Verfahren (d.h. Verschieben in Richtung der vorerwähnten Längsmittelachse) des Tüllenaufnahmeteils auf die Spreizhülse geschoben und danach die Tülle mittels des Tüllenaufnahmeteils von der Spreizhülse auf das Kabel abgestreift werden kann. Dieses Verfahren ist als Relativbewegung zu verstehen, wobei jedoch bevorzugt nur die Komponenten bzw. Werkzeuge (also Tüllenaufnahmeteil und/oder Spreizhülse) des Bestückungskopfs bewegt werden, und das Kabelende während wenigstens einem Teil oder sogar während des gesamten Bestückungsvorgangs festgehalten wird bzw. feststehend bleibt. Dadurch, dass die Spreizhülse und/oder das Tüllenaufnahmeteil zum Ermöglichen eines Werkzeugwechsels als Wechselteile ausgeführt sind, die am Bestückungskopf lösbar befestigbar und vom Bestückungskopf wieder trennbar sind und dass zum Vorgeben des Aufschiebehubs das Tüllenaufnahmeteil oder die Spreizhülse mit einem Anschlag versehen ist, der zur Begrenzung des maximal möglichen Aufschiebewegs (Aufschiebehub) mit einem der Spreizhülse oder dem Tüllenaufnahmeteil zugeordneten Gegenstück zusammenwirkt, werden eine Vielzahl von Vorteilen erreicht. Es wird ein Tüllenbestückungsmodul zu schaffen, mit dem Kabel zuverlässig und effizient mit Tüllen bestückt werden können. So kann, da im als Wechselteil ausgeführten Tüllenaufnahmeteil oder Spreizhülse ein vorzugsweise fixer Anschlag integriert ist, das Tüllenbestückungsmodul schnell und effizient umgerüstet und auf neue oder andere Tüllen vorbereitet werden. Auf ein nachträgliches Einstellen zum Festlegen des Aufschiebehubs kann verzichtet werden. Die Tüllenstation kann nach dem Wechselvorgang sofort betriebsbereit sein.

Zum Aufschieben der Tülle auf den Dorn in der Übernahmestellung kann das Tüllenbestückungsmodul weiter eine Ausstossvorrichtung mit einem auf und ab bewegbaren Stössel aufweisen, mit welcher jeweils die erste Tülle von der Förderschiene der Transfereinrichtung zuführbar ist, wobei bei diesem Zuführvorgang diese Tülle erstmalig auf den Dorn aufgeschoben wird. Sodann kann im Tüllenbestückungsmodul weiter eine Domaufschiebeeinheit vorgesehen sein, mittels welcher in einer weiteren und insbesondere in einer zweiten Stellung der Transfereinheit die Tülle zum Zwecke des Aufweitens auf einen zweiten Domabschnitt des Dornes geschoben wird, dessen Durchmesser grösser als der derjenige im Bereich des ersten Domabschnitts ist.

Gemäss einer Ausführungsform kann das Tüllenaufnahmeteil eine Stirnseite aufweisen, die den Anschlag zum Vorgeben des Aufschiebehubs bildet. Eine solche Stirnseite kann beispielsweise eine plane, rechtwinklig zur Längsmittelachse verlaufende Anschlagfläche sein. Ein solcher Anschlag kann einfach beispielsweise durch ein spanabhebendes Verfahren aus einem Metallbauteil geschaffen werden.

Bevorzugt kann dabei das Tüllenaufnahmeteil auf an sich bekannte Weise zweiteilig ausgebildet sein und zwei gegenläufig radial und zwischen einer Offenstellung und einer Schliessstellung bewegbare Backen mit Aufnahmen für die Tülle aufweisen, wobei jeder Backen jeweils einen Tüllenaufnahmeabschnitt mit einer Aussparung zum Bilden der Tüllenaufnahme und einen an den Tüllenaufnahmeabschnitt anschliessenden Befestigungsabschnitt, über welchen Befestigungsabschnitt der jeweilige Backen an den Bestückungskopf befestigt oder befestigbar ist, aufweist. Die Stirnseite kann dabei durch den oder die Befestigungsabschnitte gebildet werden. Das zweiteilig ausgebildete Tüllenaufnahmeteil kann somit zwei Anschläge aufweisen, da jeder der Befestigungsabschnitte je über eine Stirnseite oder Stirnseitensegment verfügen kann und jedem Stirnseitensegment ein Gegenstück entgegensteht. Grundsätzlich wäre es aber auch denkbar, nur eine der Stirnseiten der Befestigungsabschnitte als Anschlag zu verwenden.

Besonders bevorzugt sind die Backen des Tüllenaufnahmeteils jeweils als wenigstens bezüglich Befestigungsabschnitt und Tüllenaufnahmeabschnitt einstückige Bauteile ausgebildet. Tüllenaufnahmeabschnitt und Befestigungsabschnitt können somit monolithisch miteinander verbunden und aus einem einzigen Werkstück geschaffen sein. Das Tüllenaufnahmeteil mit Tüllenaufnahmeabschnitt und Befestigungsabschnitt kann in der Draufsicht eine L-Form aufweisen.

Der Befestigungsabschnitt kann als im Wesentlichen quaderförmiger Körper ausgestaltet sein. Der Tüllenaufnahmeabschnitt kann bevorzugt als Hohlkörper mit einer in der Draufsicht besonders bevorzugt rechteckigen Rahmenstruktur, welches Rechteck zwei parallele, quer zur Längsmittelachse verlaufende Wandabschnitte zum Aufschieben und Abstreifen auf oder von der Spreizhülse ausgestaltet sein. Die erwähnten Wandabschnitte sind dabei ein vorderer und ein hinterer Wandabschnitt, wobei die Tülle, wenn sie in dem Tüllenaufnahmeabschnitt aufgenommen ist, über oder mit dem vorderen Wandabschnitt auf die Spreizhülse geschoben wird und die Tülle über oder mit dem hinteren Wandabschnitt von der Spreizhülse abgestreift wird.

Der quaderförmige Körper und der Hohlkörper sind dabei bevorzugt aneinander angeformt und aus einem einzigen Werkstück geschaffen

Vorteilhaft kann es sein, wenn der Befestigungsabschnitt des Backens ein dem Kabel zugewandtes bzw. in Bezug auf die Längsmittelachse und die Verfahrrichtung vorderes Ende zum Bilden der Stirnseite aufweist, wobei die Stirnseite bevorzugt plan ausgeführt ist, wodurch sich so ein definierter Anschlag für ein besonders präzises Festlegen des Aufschiebehubs ergibt.

Besonders vorteilhaft ist das den Anschlag bildende vordere Ende des Befestigungsabschnitts gegenüber dem Tüllenaufnahmeabschnitt und genauer gesagt gegenüber einem vorderen Ende des Tüllenaufnahmeabschnitts zurückversetzt in dem Tüllenaufnahmeteil und genauer gesagt im jeweiligen Backen des Tüllenaufnahmeteils angeordnet ist.

Für das Tüllenaufnahmeteil kann je Backen ein Trägerteil vorgesehen sein, wobei die beiden Trägerteile zusammen mit den Backen gegenläufig radial zwischen der Offenstellung und der Schliessstellung bewegbar sind, und wobei das jeweilige Trägerteil jeweils eine Werkstückaufnahme zum formschlüssigen Einsetzen des Befestigungsabschnitts in die Werkstückaufnahme aufweist. Das in die Werkstückaufnahme eingesetzte Trägerteil ist beispielsweise mittels einer Schraubverbindung gesichert.

An die Spreizhülse kann ein Flanschabschnitt zum Bilden eines Hülsenhalters mit einem trichterförmigen Einführabschnitt anschliessen, wobei die Spreizhülse zweiteilig ausgebildet ist und zwei gegenläufig radial bewegbare Schalenteile aufweist und wobei der Hülsenhalter ebenfalls zweiteilig ausgebildet ist und zwei zusammen mit den Schalenteilen gegenläufig radial bewegbare und vorzugsweise plattenförmige Flanschabschnitte aufweist. Zum Bilden von Wechselteilen ist die Spreizhülse bzw. deren Spreizhülsenteile über den Flanschabschnitt bzw. Hülsenhalter lösbar am oder im Bestückungskopf befestigt oder befestigbar.

Das Gegenstück für den Anschlag kann in oder an einem in Bezug auf den Befestigungskopf feststehenden bzw. nicht zusammen mit der Spreizhülse abnehmbaren Gehäuse des Befestigungskopfes angeordnet sein. Das Gegenstück verbleibt somit am Gehäuse des Befestigungskopfes und kann nicht zusammen mit der Spreizhülse abgenommen werden.

Alternativ kann das Gegenstück für den Anschlag an der Spreizhülse und insbesondere an einem Flanschabschnitt als Hülsenhalter, der zusammen mit der Spreizhülse vom Befestigungskopf abgenommen und ausgewechselt werden kann, angeordnet sein.

Vorteilhaft kann es weiter sein, wenn das Gegenstück ein noppenförmiger Stempel ist. Das Gegenstück kann demnach durch eine gegenüber einer Innenseite des Gehäuses oder Innenseite des Flanschabschnitts vorstehender noppenförmiger Stempel und insbesondere durch eine noppenförmige Erhebung gebildeter Stempel gebildet sein.

Wenn das Tüllenbestückungsmodul im Fall der Verwendung des vorgängig beschriebenen zweiteilig ausgebildeten Tüllenaufnahmeteils zwei Anschläge aufweist, kann jeder Stirnseite bzw. jedem Stirnseitensegment des Tüllenaufnahmeteils je ein Gegenstück entgegenstehen. Somit kann das Tüllenbestückungsmodul zwei Stempel in Form von noppenförmigen Erhebungen umfassen.

Das durch einen Stempel gebildete Gegenstück kann einstückig mit der angrenzenden Innenseite des Gehäuses verbunden und starr im Gehäuse des Befestigungskopfes angeordnet sein. Damit wird der Aufschiebehub verändert, indem je nach Tülle unterschiedliche Tüllenaufnahmeteile gewählt und in das Tüllenbestückungsmodul eingesetzt oder auf andere Weise verbunden werden.

Das Gehäuse des Befestigungskopfes kann für jedes Teil des zweiteilig ausgebildeten Tüllenaufnahmeteils eine taschenförmige Aufnahmeöffnung aufweisen, in welche das jeweilige Teil des Tüllenaufnahmeteils über den jeweiligen Flanschabschnitt einsetzbar und wieder herausnehmbar ist.

Das Tüllenbestückungsmodul kann zum Verfahren des Bestückungskopfs entlang der Längsmittelachse einen pneumatischen bzw. pneumatisch arbeitenden Kopfantrieb und einen pneumatischen bzw. pneumatisch arbeitenden Schiebe- und Abstreiferantrieb aufweisen. Der Kopfantrieb kann dabei vorzugsweise zwei Pneumatikzylinder umfassen; der Schiebe- und Abstreiferantrieb kann einen Pneumatikzylinder aufweisen.

Weitere Einzelmerkmale und Vorteile der Erfindung ergeben sich aus der nachfolgenden Beschreibung von Ausführungsbeispielen und aus den Zeichnungen. Es zeigen:
- Fig. 1 :: eine perspektivische Darstellung einer Tüllenstation mit einem Tüllenbestückungsmodul,
- Fig. 2 :: das Tüllenbestückungsmodul aus Fig. 1 in einer anderen perspektivischen Ansicht mit einem Bestückungskopf in Offenstellung,
- Fig. 3 :: ein Tüllenaufnahmeteil des Bestückungskopfs des Tüllenbestückungsmoduls,
- Fig. 4 :: das Tüllenbestückungsmodul mit dem geschlossenen Bestückungskopf zu Beginn des Bestückungsvorgangs (Schritt 1),
- Fig. 5 :: das Tüllenbestückungsmodul, nachdem eine Tülle in einem ersten Schritt auf eine Spreizhülse des Bestückungskopfes geschoben wurde (Schritt 2),
- Fig. 6 :: das Tüllenbestückungsmodul nach einem weiteren Verfahren des Bestückungskopfes, bei welchem Tüllenaufnahmeteil und Spreizhülse bewegt wurden,
- Fig. 7 :: das Tüllenbestückungsmodul nach einem nochmals weiteren Verfahren des Bestückungskopfes, bei welchem die Tülle von der Spreizhülse auf das Kabel abgestreift wurde (Schritt 3),
- Fig. 8 :: das Tüllenbestückungmodul in der Stellung gemäss Fig. 7, jedoch nun mit offenem Bestückungskopf (Schritt 4),
- Fig. 9 :: ein ein Tüllenaufnahmeteil für eine lange Tülle aufweisender, oberer Teil des Bestückungskopfes des Tüllenbestückungsmoduls zu Beginn des Bestückungsvorgangs (Schritt 1),
- Fig. 10 :: der Bestückungskopf von Fig. 9 nach dem Aufschieben der Tülle auf die Spreizhülse (Schritt 2),
- Fig. 11 :: der Bestückungskopf von Fig. 9 nach dem Abstreifen der Tülle (Schritt 3), und
- Fig. 12 -14:: der obere Teil des Bestückungskopfes mit einem Tüllenaufnahmeteil für eine kurze Tülle in den Stellungen analog der Figuren 9 - 11.

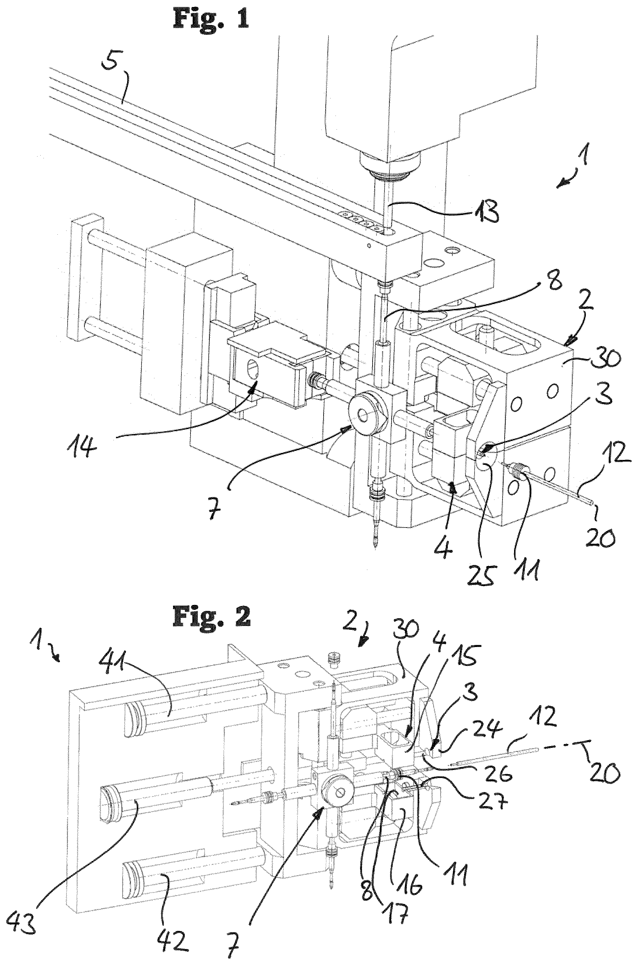

Fig. 1 zeigt eine Tüllenstation zur Tüllenbestückung von Kabeln. Tüllen sind röhrenförmige oder schlauchartige Dichtelemente beispielsweise aus Silikon, einem Gummimaterial oder aus einem anderen weichelastisch verformbaren Kunststoff, die in der Regel für feuchtigkeitsdichte Durchführungen von elektrischen Kabeln durch Steckergehäuse oder Gehäusewände von Elektroapparaten benötigt werden.

Die Tüllenstation enthält einen (nicht dargestellten) Tüllenspeicher und ein mit 1 bezeichnetes Tüllenbestückungsmodul zum Bestücken eines abisolierten Kabelendes eines Kabels 12 mit einer Tülle. Das Tüllenbestückungsmodul 1 umfasst eine sich entlang einer Längsmittelachse 20 verlaufenden Bestückungskopf 2, mit der eine Tülle auf das Kabel 12, das ebenfalls entlang der Längsmittelachse 20 liegt, gebracht werden. Die Tüllenstation kann als isolierte Maschine verwendet werden oder Bestandteil einer Anlage zum Konfektionieren von Kabeln sein, welche neben der Tüllenstation weiter Abisolierstationen, Crimpstationen und gegebenenfalls Gehäusebestückungsstationen aufweisen kann.

Das Kabel 12 wird mit einem (hier nicht dargestellten) Greifer zum Tüllenbestückungsmodul 1 herangeführt. Die vorliegend vorgestellte Tüllenstation entspricht einer vollautomatischen Ausführung. Selbstverständlich wäre es aber auch vorstellbar, anstelle eines Vollautomaten die Tüllenstation mit dem nachfolgend im Detail beschriebenen neuartigen Tüllenbestückungsmodul 1 in einer halbautomatischen Variante oder in anderen Varianten auszuführen.

Ein Tüllenspeicher der Tüllenstation kann eine Trommel zur losen Bevorratung einer Vielzahl von Tüllen aufweisen. Über eine in die drehende Trommel ragende und in Fig. 1 erkennbare Förderschiene 5 zur lagerichtigen Speicherung und Weiterbeförderung der Tüllen gelangen diese zu einer Vereinzelungseinheit. Mittels der Vereinzelungseinheit, die einer Ausstossvorrichtung mit einem Stössel 13 aufweist, kann jeweils die erste Tülle in der Förderschiene 5 dem Tüllenbestückungsmodul 2 zugeführt werden. Das nachfolgend im Detail beschriebene Tüllenbestückungsmodul 1 könnte aber auch mit anderen Tüllenspeichern oder Tüllenzuführvorrichtungen kombiniert werden. Es wäre auch eine Tüllenstation ohne Tüllenspeicher denkbar. Die Tüllen könnten einzelne manuell dem Tüllenbestückungsmodul 1 zugeführt werden.

Der vorzugsweise pneumatisch antreibbare Bestückungskopf 2 des Tüllenbestückungsmoduls 1 umfasst einer entlang der Längsmittelachse 20 sich erstreckende Spreizhülse 3 zum Halten der Tülle 11 in aufgeweiteten Zustand und ein Tüllenaufnahmeteil 4 zum Aufnehmen und Halten der Tülle 11 während des Bestückungsvorgangs und zum Platzieren der Tülle 11 auf das Kabelende des Kabels 12. Das Tüllenbestückungsmodul 1 umfasst weiter Transfereinheit (7) mit vier Dornen 8, wobei auf einen Dorn 8 in einer Übernahmestellung eine Tülle 11 mittels der erwähnten Vereinzelungseinheit mit dem Stössel 13 in einem ersten Dornabschnitt aufschiebbar ist. Das Tüllenbestückungsmodul 1 umfasst sodann eine Domaufschiebeeinheit 14, mittels welcher in einer weiteren Stellung der Transfereinheit 7 die Tülle 11 zum Zwecke des Aufweitens auf einen zweiten Domabschnitt des Dornes 8 geschoben wird, dessen Durchmesser grösser als der derjenige im Bereich des ersten Dornabschnitts ist. In einer Übergabestellung steht der Dorn 8 mit der so aufgeschobenen Tülle 11 derart mit dem Bestückungskopf 2 in Wirkverbindung, dass die Tülle 11 vom Dorn 9 dem Bestückungskopf 2 übergeben werden kann. Dabei umgibt die Spreizhülse 3 des Bestückungskopfs 2 den Dorn 8 in der Übergabestellung temporär, so dass die Tülle 11 mittels des Tüllenaufnahmeteils 4 auf die Spreizhülse 3 geschoben und danach die Tülle 11 mittels des Tüllenaufnahmeteils 4 von der Spreizhülse 3 auf das Kabel 12 abgestreift und so das Platzieren der Tülle auf das Kabelende abgeschlossen werden kann. Dabei wird das Tüllenaufnahmeteil 4 axial verfahren, d.h. in Richtung der vorerwähnten Längsmittelachse 20 verschoben, während das Kabelende festgehalten wird. Betreffend Förderschiene 2, Transfereinheit 7 mit den vier Dornen und Domaufschiebeeinheit 14 entspricht die in Fig. 1 gezeigte Tüllenstation im Wesentlichen derjenigen aus EP 0 626 738 A1 bekannt gewordenen Tüllenstation. Auch der Bestückungskopf 2 mit Spreizhülse 3 und Tüllenaufnahmeteil 4 ähnelt demjenigen aus dem Stand der Technik. Einzelheiten zur Ausgestaltung betreffend Tüllenspeicher mit Trommel, Förderschiene 5 und Vereinzelungseinheit sowie zur Gestaltung der Spreizhülse 3 und Tüllenaufnahmeteil 4 und der grundsätzlichen Wirkungsweise des Tüllenbestückungsmoduls 1 sind aus dieser Schrift entnehmbar. Das vorliegend gezeigte und nachfolgend im Detail beschriebene Tüllenbestückungsmodul 1 zeichnet sich dadurch aus, dass es ein einfaches und schnelles Umrüsten im Hinblick auf neue oder andere Tüllen erlaubt. Hierzu sind die die Spreizhülse 3 und das Tüllenaufnahmeteil 4 zum Ermöglichen eines Werkzeugwechsels als Wechselteile ausgeführt. Die Spreizhülse 3 und das Tüllenaufnahmeteil 4 sind jeweils am Bestückungskopf 2 lösbar befestigt und können vom Bestückungskopf 2 wieder abgetrennt werden. Zum Vorgeben des Aufschiebehubs ist das Tüllenaufnahmeteil 4 mit einem Anschlag versehen, der zur Begrenzung des maximal möglichen Aufschiebewegs mit einem dem Tüllenaufnahmeteil 4 zugeordneten Gegenstück 10 zusammenwirkt. Der Aufschiebeweg ist eine in Richtung der Längsachse 20 gemessene Wegstrecke.

Die Spreizhülse 3 umfasst einen länglichen, in geschlossener Stellung zylindrischen Abschnitt mit einer Hülsenspitze, auf welchen die Tülle 11 aufschiebbar ist und einen an diesen Abschnitt anschliessenden Flanschabschnitt 24. Die Hülsenspitze ist dabei in Richtung des Dorns gerichtet, der Flanschabschnitt 24 bildet das Ende zum Halten der Spreizhülse 3.

Fig. 2 zeigt den Bestückungskopf 2 des Tüllenbestückungsmoduls 1 in Offenstellung. Der mit 8 bezeichnete Dorn ist gegenüber der Übernahmestellung um 270° gedreht worden und befindet sich in der Übergabestellung. Der offene Bestückungskopf 2 ist über dem Dorn 8 mit der darauf geschobenen Tülle 11 positioniert. Das Tüllenaufnahmeteil 4 ist ersichtlicherweise zweiteilig ausgebildet und weist zwei gegenläufig radial zwischen der Offenstellung und einer Schliessstellung bewegbare Backen 15, 16 mit Aufnahmen für die Tülle 11 auf. Jeder Backen 15, 16 umfasst dabei jeweils einen Tüllenaufnahmeabschnitt 17 mit einer Aussparung zum Bilden einer Tüllenaufnahme. Die Spreizhülse 3 ist zweiteilig ausgebildet und weist zwei gegenläufig radial bewegbare Schalenteile 26, 27 auf. Das jeweilige Schalenteil 26, 27 umfasst dabei eine Hälfte des zylindrischen Abschnitts und eine Hälfte des Flanschabschnitts 24. Der obere Backen 15 des Tüllenaufnahmeteils 4 und das obere Schalenteil 26 der Spreizhülse 3 gehören zu einem oberen Block der Bestückungskopfs 2; der untere Backen 16 des Tüllenaufnahmeteils 4 und das untere Schalenteil 27 der Spreizhülse 3 gehören zu einem unteren Block. Die beiden Blöcke sind mittels eines (hier nicht dargestellten) pneumatischen Antriebs aufeinander zu bewegbar, welche Bewegung mit Pfeilen s angedeutet ist. Aus Fig. 2 ist weiter entnehmbar, dass das Tüllenbestückungsmodul zum Verfahren des Bestückungskopfs 2 entlang der Längsmittelachse 20 einen pneumatischen Kopfantrieb und einen pneumatischen Schiebe- und Abstreiferantrieb aufweist. Der Kopfantrieb umfasst vorliegend zwei Pneumatikzylinder 41, 42. Der Schiebe- und Abstreiferantrieb umfasst einen Pneumatikzylinder 43.

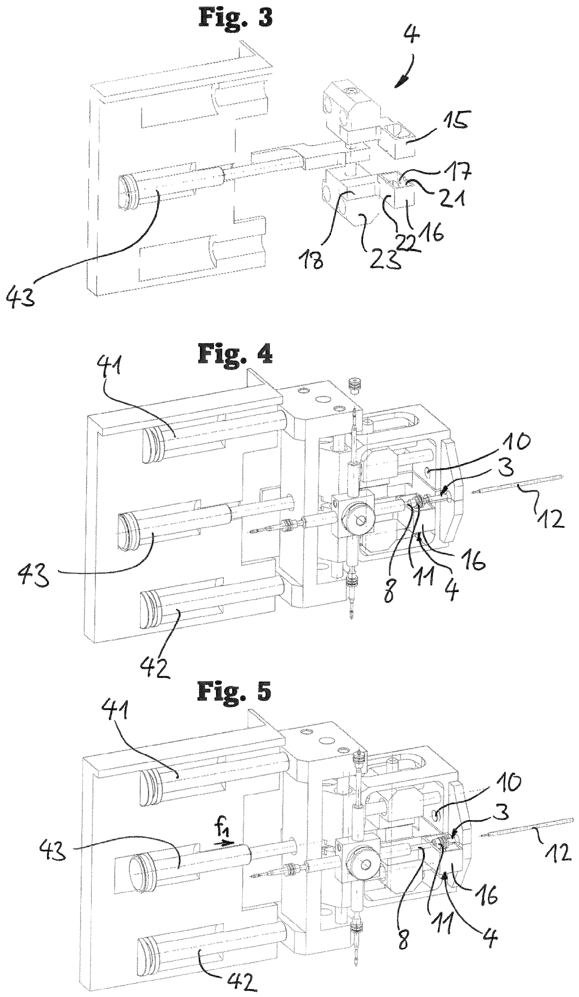

Zum besseren Verständnis der Ausgestaltung des Tüllenaufnahmeteils 4 und des zugehörigen Schiebe- und Abstreiferantrieb mit dem Pneumatikzylinder 43 sind in Fig. 3 die genannten Komponenten alleine gezeigt. Der obere und der untere Tüllenaufnahmeabschnitt 17 des Tüllenaufnahmeteils 4 ist jeweils als Hohlkörper mit einer in einer Draufsicht rechteckigen Rahmenstruktur ausgestaltet, welches Rechteck zwei parallele, quer zur Längsmittelachse 20 verlaufende Wandabschnitte 21, 22 aufweist. Am jeweiligen Tüllenaufnahmeabschnitt 17 schliesst ein quaderförmiger Befestigungsabschnitt 18 an.

Die Backen 15, 16 des Tüllenaufnahmeteils 4 sind jeweils als einstückige Bauteile ausgebildet. Tüllenaufnahmeabschnitt 17 und Befestigungsabschnitt 18 je Backen 15, 16 sind monolithisch miteinander verbunden und aus einem einzigen metallischen Werkstück geschaffen. In der Draufsicht formen Tüllenaufnahmeabschnitt 17 und Befestigungsabschnitt 18 ein "L". Mit 23 sind Trägerteile für die Backen 15, 16 bezeichnet. Die Backen 15, 16 können für einen Werkzeugwechsel von den Trägerteilen 23 abgenommen werden. Das jeweilige Trägerteil 23 weist jeweils eine Werkstückaufnahme zum formschlüssigen Einsetzen des Befestigungsabschnitts 18 in die Werkstückaufnahme auf. Der in die Werkstückaufnahme eingesetzte Backen 15, 16 ist mittels einer (nicht dargestellten) Schraubverbindung gesichert.

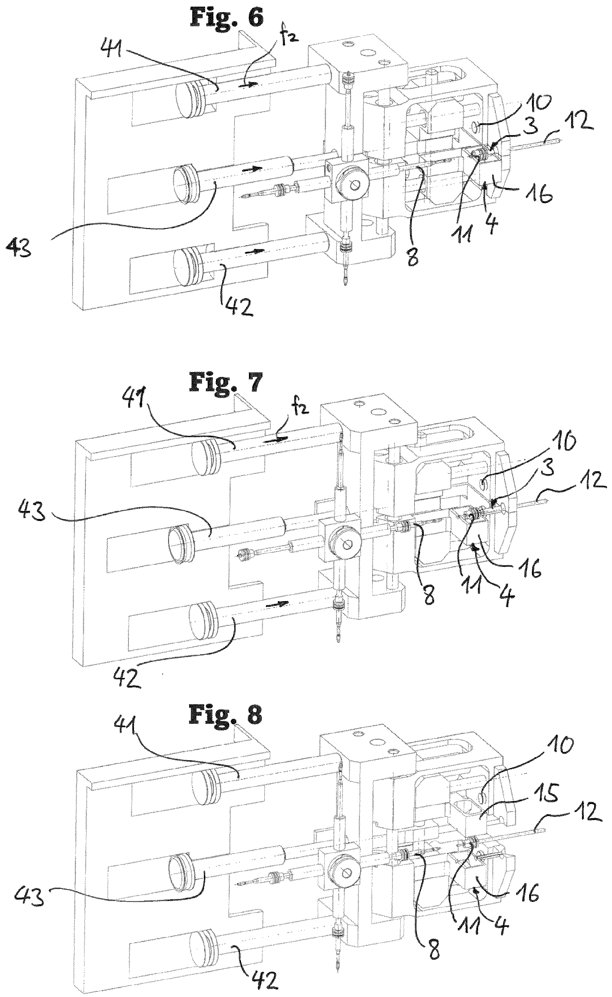

Der Bestückungsvorgang - ab dem Zeitpunkt, nachdem die Transfereinheit 7 mit dem Dorn 8 in der Übergabestellung mit dem Bestückungskopf 2 in Wirkverbindung steht, dass die Tülle 11 vom Dorn 9 dem Bestückungskopf 2 übergeben werden kann - wird nachfolgend anhand der Figuren 4 bis 8 erläutert. Mit dem Schliessen des Bestückungskopfes 2 als erstem Schritt wird die Tülle 11 auf dem Dorn 8 vom Tüllenaufnahmeteil 4 umschlossen (Fig. 4). In Fig. 4 sowie den nachfolgenden Figuren 5 bis 8 wurde zum besseren Verständnis der obere Teil des Tüllenaufnahmeteils 4 (also der obere Backen 15) jeweils weggelassen, damit die Position der Tülle 11 sichtbar ist. Der den Pneumatikzylinder 43 umfassende Schiebe- und Abstreiferantrieb wird nun - angedeutet durch den Pfeil f₁ - ausgefahren und bewirkt, dass die Tülle 11 Tüllenaufnahmeteil 4 auf die Spreizhülse 3, dessen zylindrischer Abschnitt im geschlossenen Zustand ein Rohr bildet, aufgeschoben wird, welcher Arbeitsschritt nachfolgend als "Schritt 2" bezeichnet wird und in Fig. 5 gezeigt ist. Dabei kann im vorliegenden Ausführungsbeispiel der Pneumatikzylinder 43 nicht ganz ausgefahren werden, da die Pneumatikzylinder 41, 42 des Kopfantriebs noch eingefahren sind und aufgrund der doppelten Kolbenfläche den übrigen Bestückungskopf 2 in einer Anfangsstellung halten. Jetzt werden auch die Kolben der beiden Pneumatikzylinder 41, 42 des Kopfantriebs durch Druckbeaufschlagung ausgefahren, was die Bewegung des Bestückungskopfes 2 bewirkt. Dieses Verfahren des Bestückungskopfes 2 in Richtung der Kabellängsachse ist mit einem Pfeil f₂ angedeutet. Das stillstehende Kabel 12 wird dabei über den Einlauftrichtern der Spreizhülse 3 geführt und so das Eindringen des Kabelendes des Kabels 12 in die Spreizhülse 3 erleichtert. Im Laufe dieser Bewegung erreicht der Schiebe- und Abstreiferantrieb seine ausgefahrene Stellung, was in der Fig. 6 dargestellt ist. Der Bestückungskopf 2 bewegt sich in einem weiteren Arbeitsschritt (Schritt 3) weiter, bis auch die Pneumatikzylinder 41, 42 des Kopfantriebs seine Endstellung erreicht. Dabei bewirkt das stillstehende Tüllenaufnahmeteil 4, dass die Tülle 11 von der Spreizhülse 3 abgezogen und auf dem Kabel 12 positioniert wird (Fig. 7). Die Lage der Tülle 11 auf dem Kabel 12 wird dabei von der Position des Kabels 12, das im Ausführungsbeispiel von einem hier nicht dargestellten Kabelgreifer festgehalten wird, bezüglich der Längsmittelachse 20 bestimmt. Das Kabelende wird beim Schritt 3 festgehalten; es ist auch vorstellbar, das Kabel schon beim Schritt 2 oder gegebenenfalls auch schon beim Schritt 1 festzuhalten, d.h. das Kabel während des gesamten Bestückungsvorgangs festzuhalten. Der Bestückungskopf kann nun geöffnet werden (Fig. 8), wodurch das Kabel 12 freigegeben wird. Anschliessend wird der Bestückungskopf 2 wieder zurückgefahren, um die nächste Tülle von der Transfereinheit 7, die sich in der Zwischenzeit um 90° gedreht hat, zu übernehmen.

An die Spreizhülse 3 und genauer gesagt am zylindrischen Abschnitt der Spreizhülse 3 schliesst der Flanschabschnitt 24 an. Die Spreizhülse 3 ist über den Flanschabschnitt 24 lösbar am oder im Bestückungskopf 2 befestigt. Dazu weist ein Gehäuse 30 des Befestigungskopfes 2 je Schalenteil 26 mit plattenförmigen Flanschabschnitt 24 eine taschenförmige Aufnahmeöffnung auf, in welche das jeweilige Schalenteil 26 über den zugehörigen Flanschabschnitt 24 einsetzbar und wieder herausnehmbar ist.

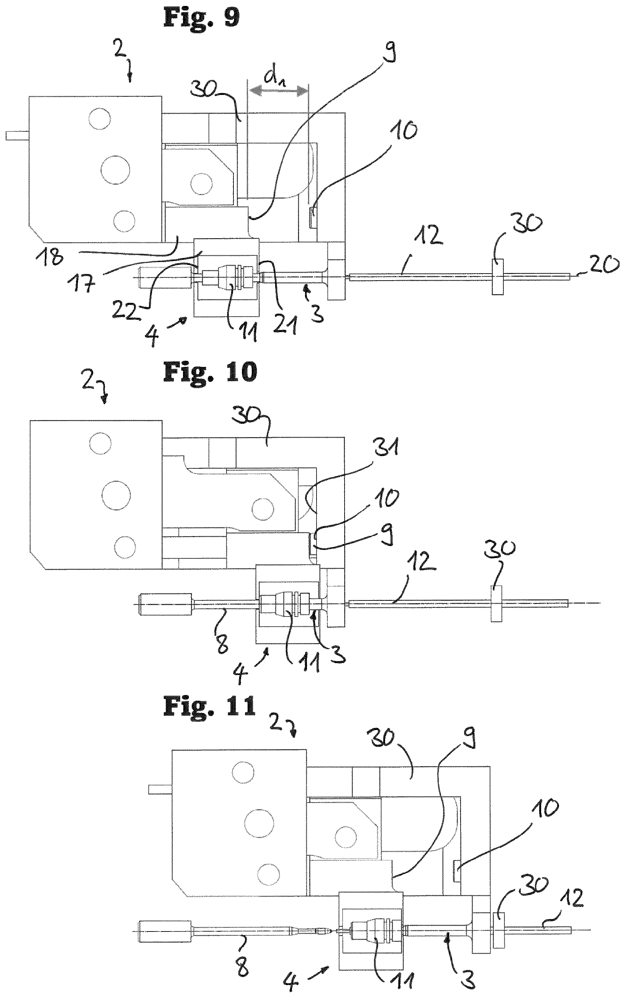

Die in Fig. 6 dargestellte Stellung des Schiebe- und Abstreiferantriebs muss präzise eingehalten werden, da das Tüllenaufnahmeteil 4 beim Aufschieben auf die Spreizhülse 3 nur soweit bewegt werden darf, bis das Tüllenaufnahmeteil 4 mit einem bevorzugt definierten, minimalen Abstand vor dem durch den Flanschabschnitt 24 gebildeten Ende der Spreizhülse 3 steht. Mittels des Tüllenaufnahmeteils 4 ist die Tülle 11 auf die Spreizhülse 3 um einen Aufschiebeweg aufschiebbar, wobei der Aufschiebeweg, welcher schliesslich die Position der Tülle auf dem Kabel festlegt, auch unter der Bezeichnung "Aufschiebehub" bekannt ist. Zum Vorgeben des Aufschiebehubs ist das Tüllenaufnahmeteil 4 mit einem Anschlag versehen sind, der zur Begrenzung des maximal möglichen Aufschiebewegs mit einem der Spreizhülse 3 zugeordneten Gegenstück zusammenwirkt. Wie dieser Aufschiebehub vorgegeben ist, ist aus Fig. 9 sowie den nachfolgenden Fig. 10 - 11 entnehmbar.

Fig. 9 zeigt den geschlossenen Bestückungskopf 2 des Tüllenbestückungsmoduls 1, welche Stellung derjenigen gemäss voriger Fig. 4 entspricht. Zum besseren Verständnis sind vom Bestückungskopf 2 nur die dem oberen Block zugehörigen Teile sowie der Tüllenaufnahmeabschnitt des unteren Backens 16 dargestellt. Das Tüllenaufnahmeteil 4 weist eine Stirnseite 9 auf, die den Anschlag zum Vorgeben des mit d₁ bezeichneten Aufschiebehubs bildet. d₁ entspricht ersichtlicherweise der Strecke entlang der Längsmittelachse 20 von der Stirnseite 9 bis zum Gegenstück 10. Der Backen 15 mit Befestigungsabschnitt 18 und Tüllenaufnahmeabschnitt 17 hat eine L -Form. Der Befestigungsabschnitt 18 des Backens 15 weist ein dem Kabel 12 zugewandtes bzw. in Bezug auf die Längsmittelachse 20 und die Verfahrrichtung vorderes Ende zum Bilden der Stirnseite 9 auf. Die Stirnseite 9 ist plan ausgeführt, wodurch sich so ein definierter Anschlag für ein besonders präzises Festlegen des Aufschiebehubs d₁ ergibt. Der untere Backens weist ebenfalls eine solche (hier jedoch nicht dargestellte) Stirnseite auf, die ebenfalls einen Anschlag bildet. Die Stirnseite 9 ist gegenüber einem vorderen Ende des Tüllenaufnahmeabschnitts 17 zurückversetzt im Backen 14 des Tüllenaufnahmeteils 4 angeordnet.

Aus Fig. 9 ist sodann gut entnehmbar, dass der Tüllenaufnahmeabschnitt 17 des Tüllenaufnahmeteils 4 zwei quer zur Längsmittelachse 20 verlaufende Wandabschnitte 21, 22 zum Aufschieben und Abstreifen auf oder von der Spreizhülse 3. Dabei kann die Tülle 11 mit dem hinteren Wandabschnitt 22 auf die Spreizhülse 3 geschoben werden, die Tülle 11 kann mit dem vorderen Wandabschnitt 21 von der Spreizhülse 3 abgestreift werden.

In Fig. 10 ist die Tülle 11 auf die die Spreizhülse 3 geschoben, d.h. das Tüllenaufnahmeteil 4 wurde um den Aufschiebehub d₂ in Richtung der Spreizhülse 3 verfahren. Die Stirnseite 9 des Tüllenaufnahmeteils 4 steht am Gegenstück 10 an. Das Gegenstück 10 für den Anschlag ist in Gehäuse 30 des Befestigungskopfes 2 angeordnet. Das bedeutet, dass das Gegenstück 10 feststehend bleibt und nicht zusammen mit der Spreizhülse 3 abgenommen werden kann. Das Gegenstück 10 ist durch eine gegenüber einer Innenseite des Gehäuses 30 vorstehende noppenförmige Erhebung gebildet. Dieser durch die noppenförmige Erhebung gebildete Stempel ist somit einstückig mit der angrenzenden Innenseite 31 des Gehäuses 30 verbunden und starr im Gehäuse des Befestigungskopfes 2 angeordnet. Es wäre aber auch vorstellbar, das durch den Stempel gebildete Gegenstück 10 beispielsweise über eine Schraubverbindung lösbar mit dem Gehäuse zu verbinden, sodass zum Erweitern des Anwendungsbereichs der Noppen durch einen anderen Noppen mit einer anderen Noppenhöhe ausgewechselt werden kann. Weiter sind auch andere Formgebungen und Gestaltungen für das Gegenstück 10 denkbar. Auch muss das Gegenstück 10 nicht unbedingt eine plane Kontaktfläche aufweisen. So kann es eine konvexe und beispielsweise eine halbkugelförmige Kontur aufweisen.

Das Kabel 12 wurde mit einem Kabelgreifer 29 zum Tüllenbestückungsmodul 1 herangeführt. Während des Bestückungsvorgangs wird der Kabelgreifer 29 jedoch nicht bewegt, so dass das Kabel 12 feststehend bleibt. Der Kabelüberstand ist dabei im Wesentlichen die Strecke vom freien Ende des Kabels bis zum Greifer 29. In Fig. 10 ist Tülle 11 von der Spreizhülse 3 abgezogen und auf dem Kabel 12 positioniert. Hierzu wurde der Befestigungskopf 2 nach rechts verfahren.

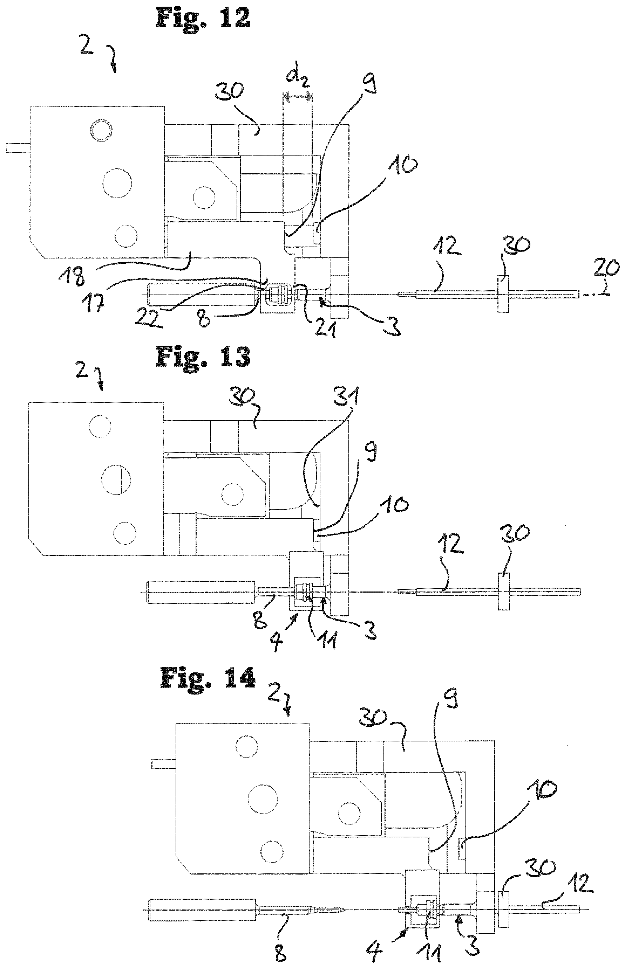

Das Tüllenbestückungsmodul 1 ist derart ausgeführt, dass ein Umrüsten im Hinblick auf andere Tüllen einfach und schnell möglich ist. Dieser Aspekt ist aus Fig. 12 erkennbar. Das Tüllenbestückungsmodul 1 ist nun für kurze Tüllen vorbereitet. Hierzu mussten lediglich die als Wechselteil ausgeführte Spreizhülse 3 und das ebenfalls als Wechselteil ausgeführte Tüllenaufnahmeteil 4 vom Tüllenbestückungsmodul 1 angenommen und durch andere ersetzt werden. Nach dem Werkzeugwechsel weist das Tüllenbestückungsmodul 1 im Vergleich zu den Fig. 9 - 11 eine kürzere Spreizhülse 3 und ein Tüllenaufnahmeteil 4 mit einem kürzeren Tüllenaufnahmeabschnitt auf. Der Aufschiebehub d₂ ist hier ersichtlicherweise deutlich kürzer.

## Patentansprüche

1. Tüllenbestückungsmodul (1) zum Bestücken eines Kabelendes eines Kabels (12) mit einer Tülle (11) umfassend einen Bestückungskopf (2) mit einer Spreizhülse (3) zum Halten der Tülle (11) in aufgeweiteten Zustand und einem ein Tüllenaufnahmeteil (4) zum Aufnehmen und Halten der Tülle (11) während des Bestückungsvorgangs und zum Platzieren der Tülle (11) auf das Kabelende, einer Transfereinheit (7) mit wenigstens einem Dorn (8), auf den in einer Übernahmestellung eine Tülle (11) aufschiebbar ist und der in einer Übergabestellung derart mit dem Bestückungskopf (2) in Wirkverbindung steht, dass die Tülle (11) vom Dorn (9) dem Bestückungskopf (2) übergeben werden kann, wobei die Spreizhülse (3) des Bestückungskopfs (2) den Dorn (8) in der Übergabestellung temporär umgibt, so dass die Tülle (11) durch axiales Verfahren des Tüllenaufnahmeteils (4) auf die Spreizhülse (3) geschoben und danach die Tülle (11) mittels des Tüllenaufnahmeteils (4) von der Spreizhülse (3) auf das Kabel (12) abgestreift werden kann, **dadurch gekennzeichnet, dass** die Spreizhülse (3) und/oder das Tüllenaufnahmeteil (4) als Wechselteile ausgeführt sind, die am Bestückungskopf (2) lösbar befestigt oder befestigbar und vom Bestückungskopf (2) wieder abtrennbar sind und dass zum Vorgeben des Aufschiebehubs (d₁, d₂) das Tüllenaufnahmeteil (4) oder die Spreizhülse (3) mit einem Anschlag versehen sind, der mit einem der Spreizhülse (3) oder dem Tüllenaufnahmeteil (4) zugeordneten Gegenstück (10) zusammenwirkt.

2. Tüllenbestückungsmodul (1) nach Anspruch 1, **dadurch gekennzeichnet, dass** das Tüllenaufnahmeteil (4) eine Stirnseite (9) aufweist, die den Anschlag zum Vorgeben des Aufschiebehubs (d₁, d₂) bildet.

3. Tüllenbestückungsmodul (1) nach Anspruch 2, **dadurch gekennzeichnet, dass** das Tüllenaufnahmeteil (4) zweiteilig ausgebildet ist und zwei gegenläufig radial bewegbare Backen (15, 16) mit Aufnahmen für die Tülle () aufweist, wobei jeder Backen (15, 16) jeweils einen Tüllenaufnahmeabschnitt (17) mit einer Aussparung zum Bilden der Tüllenaufnahme und einen an den Tüllenaufnahmeabschnitt anschliessenden Befestigungsabschnitt (18), und dass die Stirnseite (9) durch den oder die Befestigungsabschnitte (18) gebildet wird.

4. Tüllenbestückungsmodul (1) nach Anspruch 3, **dadurch gekennzeichnet, dass** die Backen (15, 16) des Tüllenaufnahmeteils () jeweils als einstückige Bauteile ausgebildet sind.

5. Tüllenbestückungsmodul (1) nach einem der Ansprüche 2 bis 4, **dadurch gekennzeichnet, dass** der Tüllenaufnahmeabschnitt (17) bevorzugt als Hohlkörper mit einer in der Draufsicht besonders bevorzugt rechteckigen Rahmenstruktur ausgestaltet ist, welcher Tüllenaufnahmeabschnitt zwei parallele Wandabschnitte (21, 22) zum Aufschieben und Abstreifen auf oder von der Spreizhülse (3) umfasst.

6. Tüllenbestückungsmodul (1) nach einem der Ansprüche 2 bis 5, **dadurch gekennzeichnet, dass** der Befestigungsabschnitt (18) des Backens (15, 16) ein vorderes Ende zum Bilden der Stirnseite aufweist.

7. Tüllenbestückungsmodul (1) nach Anspruch 6, **dadurch gekennzeichnet, dass** das den Anschlag bildende vordere Ende des Befestigungsabschnitts (18) gegenüber dem Tüllenaufnahmeabschnitt (17) zurückversetzt angeordnet ist.

8. Tüllenbestückungsmodul (1) nach einem der Ansprüche 1 bis 7, **dadurch gekennzeichnet, dass** für das Tüllenaufnahmeteil (4) je Backen (15, 16) ein Trägerteil (23) vorgesehen ist, wobei die beiden Trägerteile (23) zusammen mit den Backen gegenläufig radial zwischen der Offenstellung und der Schliessstellung bewegbar sind, und dass das jeweilige Trägerteil (23) jeweils eine Werkstückaufnahme zum formschlüssigen Einsetzen des Befestigungsabschnitts (18) in die Werkstückaufnahme aufweist.

9. Tüllenbestückungsmodul (1) nach einem der Ansprüche 1 bis 8, **dadurch gekennzeichnet, dass** an die Spreizhülse (3) ein Hülsenhalter mit einem Flanschabschnitt (24) mit einem trichterförmigen Einführabschnitt (25) anschliesst, wobei die Spreizhülse (3) zweiteilig ausgebildet ist und zwei gegenläufig radial bewegbare Schalenteile (26) aufweist wobei die Spreizhülse (3) über den Flanschabschnitt (24) lösbar am oder im Bestückungskopf (2) befestigt oder befestigbar ist.

10. Tüllenbestückungsmodul (1) nach einem der Ansprüche 1 bis 9, **dadurch gekennzeichnet, dass** das Gegenstück (10) für den Anschlag an einem in Bezug auf den Befestigungskopf (2) in oder an einem Gehäuse (30) des Befestigungskopfes (2) angeordnet ist.

11. Tüllenbestückungsmodul (1) nach einem der Ansprüche 1 bis 10, **dadurch gekennzeichnet, dass** das Gegenstück (10) für den Anschlag an der Spreizhülse und insbesondere an einem als Hülsenhalter ausgeführten Flanschabschnitt (24), der zusammen mit der Spreizhülse (3) vom Befestigungskopf (2) abgenommen und ausgewechselt werden kann, angeordnet ist.

12. Tüllenbestückungsmodul (1) nach einem der Ansprüche 1 bis 11, **dadurch gekennzeichnet, dass** das Gegenstück (10) ein noppenförmiger Stempel ist.

13. Tüllenbestückungsmodul (1) nach den Ansprüchen 11 und 12, **dadurch gekennzeichnet, dass** das durch einen Stempel gebildete Gegenstück (10) einstückig mit der angrenzenden Innenseite (31) verbunden und starr im Gehäuse (30) des Befestigungskopfes (2) angeordnet ist.

14. Tüllenbestückungsmodul (1) nach einem der Ansprüche 10 bis 13, **dadurch gekennzeichnet, dass** das Gehäuse (30) des Befestigungskopfes (2) je Schalenteil (26) mit plattenförmigen Flanschabschnitt (24) eine taschenförmige Aufnahmeöffnung aufweist, in welche das Schalenteil (26) über den zugehörigen Flanschabschnitt (24) einsetzbar und wieder herausnehmbar ist.

15. Tüllenbestückungsmodul (1) nach einem der Ansprüche 1 bis 14, **dadurch gekennzeichnet, dass** das Tüllenbestückungsmodul zum Verfahren des Bestückungskopfs (2) entlang der Längsmittelachse (20) einen pneumatischen und insbesondere zwei Pneumatikzylinder (41, 42) umfassenden Kopfantrieb und einen pneumatischen und insbesondere einen Pneumatikzylinder (43) umfassenden Schiebe- und Abstreiferantrieb aufweist.
